# EUROPÄISCHE PATENTANMELDUNG

(11) **EP 3 909 716 A1**
(43) Veröffentlichungstag der Anmeldung: **17.11.2021**
(21) Anmeldenummer: 21173548.5
(22) Anmeldetag: 12.05.2021
(51) Int. Cl.: B23Q 11/00

(54) **ABFÜHRVORRICHTUNG ZUM ABFÜHREN VON SPÄNEN, WERKZEUGMASCHINE UND VERFAHREN ZUM ABFÜHREN VON SPÄNEN**

(30) Priorität: 14.05.2020 DE 102020113087
(71) Anmelder: HOMAG GmbH, 72296 Schopfloch (DE)
(72) Erfinder: Metze, Benjamin, 72202 Nagold (DE)
(74) Vertreter: Hoffmann Eitle

(57) **Zusammenfassung**

Abführvorrichtung (10) zum Abführen von Spänen, die durch einen spannehmenden Bearbeitungsvorgang an einem Werkstück (11) entstehen, insbesondere für eine Werkzeugmaschine (12), mit einer Fangeinrichtung (16), die zum Abfangen der Späne zumindest teilweise in einem durch den spannehmenden Bearbeitungsvorgang erzeugten Spanstrahl (38) anordenbar ist, wobei die Fangeinrichtung (16) um eine Drehachse (22) drehbar gelagert ist und während dem Abfangen der Späne eine Rotationsbewegung (R) ausführbar ist, eine Werkzeugmaschine (12) zum Bearbeiten eines Werkstücks (11) sowie ein Verfahren zum Abführen von Spänen, die durch einen spannehmenden Bearbeitungsvorgang an einem Werkstück (11) entstehen.

## Beschreibung

### Technisches Gebiet

Die Erfindung betrifft eine Abführvorrichtung zum Abführen von Spänen, eine Werkzeugmaschine zum Bearbeiten von Werkstücken sowie ein Verfahren zum Abführen von Spänen.

### Stand der Technik

Bei der spannehmenden Bearbeitung von Werkstücken durch eine Werkzeugmaschine entstehen Späne und Staub. Diese werden in die Umgebung befördert und führen somit zu einer Verschmutzung des Arbeitsplatzes sowie zu einer Belastung des Bedieners der Werkzeugmaschine. Spannehmende Werkzeugmaschinen weisen zur Spanerfassung deshalb häufig eine Absaugeinrichtung auf, welche die während des Bearbeitungsvorgangs entstehenden Späne und Staub absaugt. Um ein Austreten der Späne aus dem Absaugbereich zwischen der Absaugeinrichtung und dem zu bearbeitenden Werkstück zu verhindern, können ergänzend zur Absaugung Flachbürsten eingesetzt werden, welche Öffnungen zwischen der Absaugeinrichtung und dem Werkstück verschließen. Aufgrund der relativ geringen Querschnittsfläche solcher Flachbürsten, kann insbesondere ein gerichteter Spanstrahl diese durchdringen und im Auftreffbereich zu einem beschleunigten Verschleiß führen.

### Darstellung der Erfindung

Der Erfindung liegt die Aufgabe zugrunde, eine Abführvorrichtung vorzuschlagen, die bei einem spannehmenden Bearbeitungsvorgang ein zuverlässiges Abführen der Späne ermöglicht. Zudem ist es Aufgabe der Erfindung eine Werkzeugmaschine vorzuschlagen, bei der ein zuverlässiges Abführen der Späne vorgesehen ist. Darüber hinaus ist es Aufgabe der Erfindung ein Verfahren vorzuschlagen, welches bei einem spannehmenden Bearbeitungsvorgang ein zuverlässiges Abführen der Späne ermöglicht.

Eine Abführvorrichtung zum Abführen von Spänen ist in Anspruch 1 definiert. Eine Werkzeugmaschine ist in Anspruch 12 definiert. Ein Verfahren zum Abführen von Spänen ist in Anspruch 14 definiert. Unteransprüche beziehen sich auf bestimmte Ausführungsformen.

Die Aufgabe wird durch eine Abführvorrichtung zum Abführen von Spänen, die durch einen spannehmenden Bearbeitungsvorgang an einem Werkstück entstehen, insbesondere für eine Werkzeugmaschine, mit einer Fangeinrichtung, die zum Abfangen der Späne zumindest teilweise in einem durch den spannehmenden Bearbeitungsvorgang erzeugten Spanstrahl anordenbar ist, gelöst, wobei die Fangeinrichtung um eine Drehachse drehbar gelagert ist und zum Abfangen der Späne eine Rotationsbewegung ausführbar ist.

Mit einer solchen Abführvorrichtung kann ein zuverlässiges Abfangen und Abführen der Späne erreicht sein. Dadurch, dass die Fangeinrichtung während dem Abfangen der Späne die Rotationsbewegung ausführt, trifft der Spanstrahl auf einen sich kontinuierlich ändernden Bereich der Fangeinrichtung. Auf diese Weise wird der Verschleiß auf den gesamten Umfang der Fangeinrichtung verteilt, sodass durch diese Fangeinrichtung längere Standzeiten erreicht sein können.

Eine bevorzugte Weiterbildung der Abführvorrichtung kann vorsehen, dass die Fangeinrichtung einen Rotationskörper aufweist, dessen Außenumfang zumindest bereichsweise durch wenigstens ein Fangelement zum Abfangen der Späne ausgebildet ist.

Das wenigstens eine Fangelement ermöglicht das Abfangen der auftreffenden Späne, indem diesen durch das Fangelement die kinetische Energie entzogen wird. Dabei kann das wenigstens eine Fangelement zumindest einen Teil der Späne aufnehmen. Insbesondere kann die Fangeinrichtung als ein walzenförmiger bzw. zylindrischer Rotationskörper ausgebildet sein. Dabei kann der Rotationskörper sowohl eine ebene als auch eine konkave, konvexe oder auch gestufte Außenkontur aufweisen.

Eine besonders bevorzugte Ausgestaltung der Abführvorrichtung kann vorsehen, dass das wenigstens eine Fangelement als ein flexibler Formkörper ausgebildet ist, der an eine Werkstückkontur des zu bearbeitenden Werkstücks anpassbar ist, oder eine Vielzahl Fangelemente vorgesehen sind, die als flexible Borsten und/oder Lamellen ausgebildet ist.

Die Flexibilität des wenigstens einen Fangelements ermöglicht ein Anpassen der Fangeinrichtung an die Werkstückkontur, insbesondere die durch den Bearbeitungsvorgang erzeugte Werkstückkontur. Diese kann beispielsweise eine Nut, eine Falz, eine Schräge oder eine ähnliche durch ein Bearbeitungswerkzeug erzeugte Werkstückkontur sein. Insbesondere bei Werkzeugmaschinen, bei welchen der Bearbeitungsvorgang im Gleichlaufverfahren erfolgt, verläuft der Spanstrahl unmittelbar entlang der durch das Bearbeitungswerkzeug erzeugten Werkstückkontur. Durch das wenigstens eine flexible Fangelement kann ein Eingreifen der Fangeinrichtung in diese Werkstückkontur ermöglicht sein, sodass ein unkontrolliertes Entweichen der Späne über die erzeugte Werkstückkontur verhindert ist. Gleichermaßen kann es dadurch ermöglicht werden, Späne aus der erzeugten Werkstückkontur zu entfernen und/oder eine erzeugte Werkstückkontur zu reinigen.

Eine vorteilhafte Weiterbildung der Abführvorrichtung kann zudem vorsehen, dass der Fangeinrichtung eine Reinigungseinrichtung zum Entfernen der abgefangenen Späne zugeordnet ist.

Da sich die abgefangenen Späne an der Fangeinrichtung kontinuierlich anlagern, ist ein stetiges Reinigen der Fangeinrichtung erforderlich. Die Reinigungseinrichtung ermöglicht ein kontinuierliches Entfernen der Späne, sodass im Betrieb eine Abfangleistung der Fangeinrichtung aufrechterhalten werden kann.

In einer vorteilhaften Weiterbildung der Abführvorrichtung kann die Reinigungseinrichtung einen sich entlang einer Längserstreckung der Fangeinrichtung erstreckenden Abstreifer aufweisen und das Entfernen der Späne durch ein Angreifen des Abstreifers an der Fangeinrichtung oder ein Eingreifen des Abstreifers in die Fangeinrichtung vorgesehen sein.

Durch einen solchen Abstreifer kann ein mechanisches Entfernen der Späne vorgesehen sein, wodurch eine zuverlässige Reinigung der Fangeinrichtung erreicht sein kann. Der Abstreifer kann beispielsweise kammartig an das wenigstens eine Fangelement angreifen oder eingreifen und dadurch die aufgenommenen Späne entfernen.

Eine weitere vorteilhafte Weiterbildung der Abführvorrichtung kann vorsehen, dass eine Druckluftquelle vorgesehen ist und die Fangeinrichtung zum Entfernen der Späne und/oder zum Antreiben der Rotationsbewegung durch einen Druckluftstrom anströmbar und/oder durchströmbar ist.

Diese Druckluftquelle kann sowohl alternativ als auch ergänzend zu dem Abstreifer vorgesehen sein. Der Druckluftstrom ermöglicht ein berührungsloses Entfernen der Späne von der Fangeinrichtung. Zudem kann durch den Druckluftstrom die Rotationsbewegung der Fangeinrichtung antreibbar sein, indem diese beispielsweise tangential angeströmt wird.

In einer weiteren Ausgestaltung der Abführvorrichtung kann zudem vorgesehen sein, dass innerhalb der Fangeinrichtung wenigstens ein Druckluftkanal ausgebildet ist und die Fangeinrichtung zum Entfernen der Späne und/oder zum Antreiben der Rotationsbewegung von dem Druckluftstrom radial durchströmbar ist.

Der wenigstens eine Druckluftkanal kann innerhalb der Fangeinrichtung entlang einer Längserstreckung ausgebildet sein und ein radiales Austreten der Druckluft ermöglichen. Durch die radiale Durchströmung der Fangeinrichtung von innen nach außen mit der Druckluft kann ein effizientes Entfernen der aufgenommenen Späne erreicht sein. Alternativ oder zusätzlich zum vorstehend beschriebenen Druckluftkanal kann eine Absaugeinrichtung zum Absaugen der aufgenommenen Späne vorgesehen sein.

Eine Ausgestaltung der Abführvorrichtung kann zudem vorsehen, dass eine Antriebseinrichtung vorgesehen ist, durch welche die Rotationsbewegung der Fangeinrichtung antreibbar ist.

Diese Antriebseinrichtung kann beispielsweise motorisch ausgebildet sein, wodurch eine Steuerung der Rotationsbewegung, beispielsweise eine Rotationsgeschwindigkeit oder eine Drehrichtung, ermöglicht ist.

Die Abführvorrichtung kann in einer vorteilhaften Weiterbildung zudem eine Stelleinrichtung aufweisen, durch welche eine Stellbewegung zumindest der Fangeinrichtung zwischen einer Nichtgebrauchsposition und einer Gebrauchsposition ansteuerbar ist.

Beispielsweise kann durch die Stelleinrichtung die Stellbewegung in eine X-Richtung und/oder Y-Richtung und/oder Z-Richtung ansteuerbar sein. In der Gebrauchsposition kann die Fangeinrichtung insbesondere in der Weise angeordnet sein, dass diese in Kontakt zu dem Werkstück gebracht ist, sodass die Fangeinrichtung durch eine Bewegung des Werkstücks antreibbar ist.

Eine besonders vorteilhafte Weiterbildung der Abführvorrichtung kann zudem vorsehen, dass eine Spanabführeinrichtung vorgesehen ist, wobei die Fangeinrichtung zumindest teilweise in der Spanabführeinrichtung angeordnet ist und das wenigstens eine Fangelement zum Abfangen der Späne zumindest bereichsweise gegenüber einem Randabschnitt der Spanabführeinrichtung hervorsteht.

Nach dem Abfangen der Späne durch die Fangeinrichtung und dem Reinigen der Fangeinrichtung durch die Reinigungseinrichtung ist das Abführen der Späne durch die Spanabführeinrichtung vorgesehen. Die Spanabführeinrichtung kann trichterartig ausgebildet sein und zum Aufnehmen der Späne einen dem Bearbeitungsbereich bzw. dem Werkstück zugeordneten Öffnungsbereich aufweisen. Über einen Auslass werden die Späne abgeführt. Die Spanabführeinrichtung kann zum Abführen der Späne zudem eine Absaugeinrichtung aufweisen.

Die Aufgabe wird zudem durch eine Werkzeugmaschine zum Bearbeiten eines Werkstücks, insbesondere Werkstück, das zumindest teilweise aus Holz, einem Holzwerkstoff, Kunststoff, Verbundwerkstoff oder dergleichen ausgebildet ist, mit einer Werkstückauflage zum Aufnehmen des Werkstücks, mit zumindest einem Bearbeitungswerkzeug zum Ausführen eines spannehmenden Bearbeitungsvorgangs, wobei das Bearbeitungswerkzeug und/oder das Werkstück zum Ausführen des Bearbeitungsvorgangs relativ zueinander bewegbar vorgesehen sind, sowie mit einer Abführvorrichtung zum Abführen von Spänen, die durch den spannehmenden Bearbeitungsvorgang am Werkstück entstehen, gelöst, wobei die Abführvorrichtung gemäß einer der zuvor beschriebenen Ausführungsformen ausgebildet ist.

Eine solche Werkzeugmaschine kann insbesondere als eine Durchlaufmaschine ausgebildet sein, bei welcher der Bearbeitungsvorgang im Durchlaufverfahren erfolgt. Der Bearbeitungsvorgang kann dabei sowohl im Gleichlaufverfahren oder auch im Gegenlaufverfahren vorgesehen sein. Insbesondere im Gleichlaufverfahren verläuft ein durch das Bearbeitungswerkzeug erzeugter Spanstrahl unmittelbar entlang der durch das Bearbeitungswerkzeug erzeugten Werkstückkontur, beispielsweise einer Nut. Die Abführvorrichtung ermöglicht ein zuverlässiges Abfangen und Abführen dieses Spanstrahls, indem diese in die erzeugte Werkstückkontur eingreift und die Späne innerhalb der Werkstückkontur abfängt. Indem die Fangeinrichtung während dem Abfangen der Späne zudem eine Rotationsbewegung ausführt, tritt ein reduzierter Verschleiß der Fangeinrichtung auf, da der Spanstrahl auf einen sich kontinuierlich ändernden Umfangsbereich auftrifft. Ein reduzierter Verschleiß der Fangeinrichtung kann wiederum mit einer verlängerten Standzeit der Werkzeugmaschine einhergehen. Darüber hinaus kann ein verbessertes Auffangvermögen der Fangeinrichtung erreicht und eine Richtung und Geschwindigkeit des Abtransports können beeinflusst werden. Gleichermaßen kann der Abtransport der Späne mit einer Reinigung der Werkstückkontur einhergehen.

Eine bevorzugte Weiterbildung der Werkzeugmaschine kann zudem vorsehen, dass die Werkzeugmaschine als Durchlaufmaschine ausgebildet ist und die Fangeinrichtung der Abführvorrichtung zum Abfangen der Späne in Richtung eines durch den spannehmenden Bearbeitungsvorgang erzeugten Spanstrahls angeordnet ist.

Bei einer solchen Durchlaufmaschine führt das Werkstück zum Ausführen des Bearbeitungsvorgangs eine Transportbewegung relativ zum Bearbeitungswerkzeug aus. Die Fangeinrichtung kann insbesondere quer zum Spanstrahl angeordnet sein. Die Länge der Fangeinrichtung in der Längserstreckung kann dabei insbesondere an eine Breite des Werkstücks oder an eine durch das Bearbeitungswerkzeug gebildete Breite eines Arbeitsbereiches oder an die Breite der Abführvorrichtung angepasst sein.

In einer vorteilhaften Weiterbildung der Werkzeugmaschine kann das wenigstens eine Fangelement der Fangeinrichtung zumindest abschnittsweise in Kontakt zu dem zu bearbeitenden Werkstück bringbar sein, um den Spanstrahl abzufangen.

Auf diese Weise kann eine Lücke oder Öffnung zwischen dem Werkstück und der Abführvorrichtung durch die Fangeinrichtung geschlossen werden, sodass keine Späne in die Umgebung entweichen können. Ferner kann auf diese Weise eine Rotationsbewegung der Abfangeinrichtung infolge der Werkstückbewegung gefördert werden.

Die Aufgabe wird zudem durch ein Verfahren zum Abführen von Spänen, die durch einen spannehmenden Bearbeitungsvorgang an einem Werkstück entstehen, insbesondere für eine Werkzeugmaschine, gelöst, bei welchem eine Fangeinrichtung zumindest teilweise in einem durch den spannehmenden Bearbeitungsvorgang erzeugten Spanstrahl angeordnet wird und die Fangeinrichtung während dem Abfangen der Späne eine Rotationsbewegung um eine Drehachse ausführt.

Durch dieses Verfahren kann ein zuverlässiges Abfangen und Abführen der bei dem Bearbeitungsvorgang entstehenden Späne erreicht sein. Dadurch, dass die Fangeinrichtung zum Abfangen der Späne in den Spanstrahl angeordnet wird und die Rotationsbewegung ausführt, trifft der Spanstrahl auf einen sich kontinuierlich ändernden Bereich der Fangeinrichtung. Dadurch kann der Verschleiß auf die Umfangsfläche der Fangeinrichtung verteilt werden, sodass längere Gebrauchszyklen der Fangeinrichtung erreicht werden können. Eine bevorzugte Weiterbildung des Verfahrens kann zudem vorsehen, dass wenigstens ein Fangelement der Fangeinrichtung durch die Rotationsbewegung in eine durch den spannehmenden Bearbeitungsvorgang gebildete Werkstückkontur eingreift und der in der Werkstückkontur gebildete Spanstrahl abgefangen wird.

Auf diese Weise kann der Spanstrahl, der durch die Erzeugung der Werkstückkontur durch das Bearbeitungswerkzeug erzeugt wird, innerhalb der Werkstückkontur durch das wenigstens eine Fangelement abgefangen werden. Ein Herausschleudern der Späne über die Werkstückkontur in die Umgebung kann dadurch verhindert sein.

### Kurze Beschreibung der Zeichnungen

Weitere Merkmale und Vorteile einer Vorrichtung, einer Verwendung und/oder eines Verfahrens ergeben sich aus der nachfolgenden Beschreibung von Ausführungsformen unter Bezugnahme auf die beiliegenden Zeichnungen. Von diesen Zeichnungen zeigt:
- Fig. 1: eine perspektivische Ansicht einer Ausführungsform einer offenbarungsgemäßen Abführvorrichtung;
- Fig. 2: eine schematische Seitenansicht der Abführvorrichtung gemäß Figur 1;
- Fig. 3: eine schematische Detailansicht einer Fangeinrichtung der Abführvorrichtung;

### Beschreibung von Ausführungsformen

Gleiche Bezugszeichen, die in verschiedenen Figuren aufgeführt sind, benennen identische, einander entsprechende, oder funktionell ähnliche Elemente.

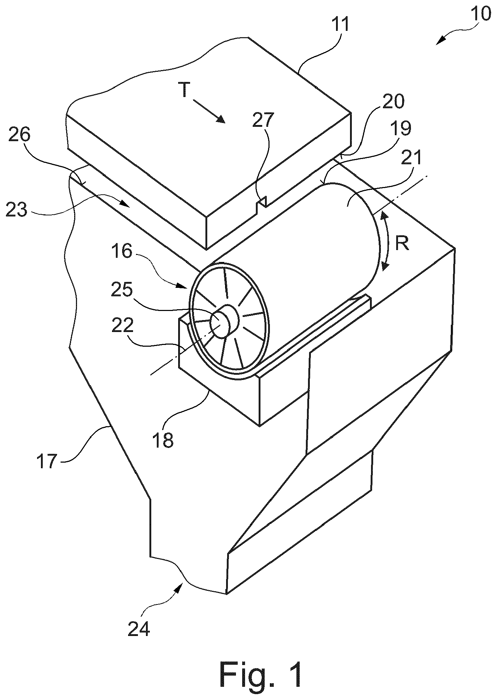

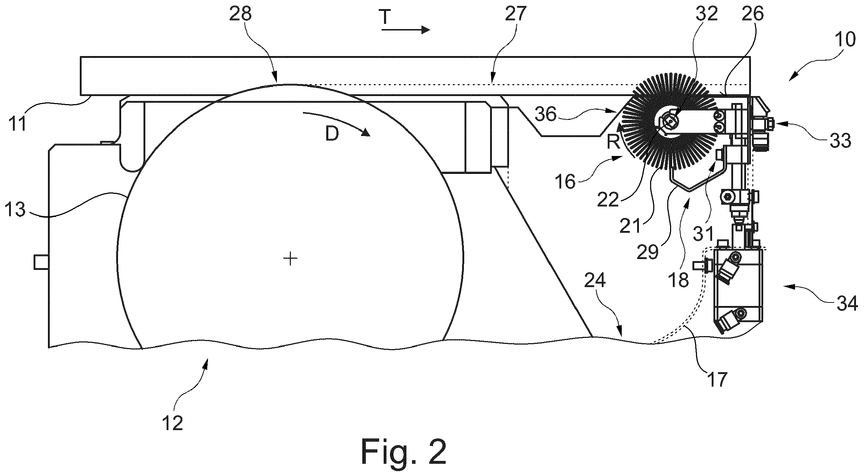

Figur 1 zeigt eine perspektivische Ansicht einer Ausführungsform einer offenbarungsgemäßen Abführvorrichtung 10 in einer schematischen Darstellung. Eine solche Abführvorrichtung 10 ist zum Abführen von Spänen und Staub, welche bei einem spannehmenden Bearbeitungsvorgang an einem Werkstück 11 entstehen, vorgesehen. Insbesondere ist die Abführvorrichtung 10 für eine in Figur 2 schematisch angedeutete Werkzeugmaschine 12, die ein Bearbeitungswerkzeug 13 für eine spannehmende Bearbeitung von Werkstücken 11 aufweist, vorgesehen.

Bei der Werkzeugmaschine 10 kann es sich um eine beliebige Werkzeugmaschine zum Bearbeiten von Werkstücken 11 handeln. Insbesondere ist die Werkzeugmaschine 10 als eine Holzbearbeitungseinrichtung ausgebildet. Die Werkzeugmaschine 10 ist insbesondere als eine Durchlaufmaschine ausgebildet. Bei einer solchen Durchlaufmaschine erfolgt das Bearbeiten der Werkstücke 11 im Durchlaufverfahren. Die Werkstücke 11 werden dabei durch eine nicht näher dargestellte Transporteinrichtung in einer Transportrichtung T relativ zum Bearbeitungswerkzeug 13 bewegt. Der Bearbeitungsvorgang kann als Gleichlaufverfahren ausgebildet sein. Bei einem Bearbeitungsvorgang im Gleichlaufverfahren sind die Bewegungsrichtung D des Bearbeitungswerkzeugs 13 im Arbeitsbereich sowie die Transportrichtung T des Werkstücks 11 gleichgerichtet vorgesehen, wie dies in Figur 2 dargestellt ist. Ebenso kann der Bearbeitungsvorgang im Gegenlaufverfahren vorgesehen sein. Im Gegenlaufverfahren sind die Bewegungsrichtung des Bearbeitungswerkzeugs 13 in einem Arbeitsbereich sowie die Transportrichtung T des Werkstücks 11 entgegengesetzt ausgebildet.

Alternativ kann die Werkzeugmaschine 10 auch als eine stationäre Bearbeitungseinrichtung ausgebildet sein. Bei dieser kann beispielsweise das Bearbeitungswerkzeug 13 relativ zum Werkstück 11 bewegt werden. Die Werkzeugmaschine 10 kann ebenso als eine CNC-gesteuerte Bearbeitungseinrichtung ausgebildet sein oder ein CNCgesteuertes Bearbeitungszentrum bilden.

Das Bearbeitungswerkzeug 13 ist insbesondere als ein spannehmendes Bearbeitungswerkzeug 13 ausgebildet, beispielsweise als ein Sägewerkzeug, Fräswerkzeug, Nutwerkzeug, Falzwerkzeug oder dergleichen. Unter dem Begriff Bearbeitungsvorgang ist somit nachfolgend insbesondere das Zuschneiden, Sägen, Schrägen, Fräsen, Nuten, Falzen oder ein vergleichbarer spannehmender Bearbeitungsvorgang am Werkstück 11 durch das Bearbeitungswerkzeug 13 zu verstehen.

Bei den zu bearbeitenden Werkstücken 11 handelt es sich insbesondere um Werkstücke 11, die zumindest teilweise aus Holz, Holzwerkstoffen, Kunststoff, Verbundwerkstoffen oder dergleichen ausgebildet sind. Dabei kann es sich um unterschiedliche Werkstücke 11 handeln, beispielsweise Massivholz- oder Spanplatten, Leichtbauplatten, Sandwichplatten, Fußbodenleisten, Profile oder dergleichen. Die vorliegende Erfindung ist jedoch nicht auf die Bearbeitung derartiger Werkstücke 11 und Werkstoffe beschränkt.

Zum Abfangen und Abführen der Späne während des Bearbeitungsvorgangs ist die Abführvorrichtung 10 dem zu bearbeitenden Werkstück 11 zugeordnet. Die Abführvorrichtung 10 umfasst eine Fangeinrichtung 16 sowie eine Spanabführeinrichtung 17. Zudem weist die Abführvorrichtung 10 eine Reinigungseinrichtung 18 zum Entfernen der Späne von der Fangeinrichtung 16 auf.

Die Fangeinrichtung 16 ist als ein Rotationskörper ausgebildet. Insbesondere ist die Fangeinrichtung 16 wie in Figur 1 dargestellt als ein walzenförmiger bzw. zylindrischer Rotationskörper ausgebildet. Eine Außenkontur 19 der Fangeinrichtung 16 kann an eine Oberflächenkontur 20 des zu bearbeitenden Werkstücks 11 angepasst sein. Gemäß Figur 1 weißt die zylindrische Fangeinrichtung 16 eine im Wesentlichen ebene Außenkontur 19 auf. Ebenso kann die Außenkontur 19 der Fangeinrichtung 16 konkav, konvex, abgestuft oder andersartig ausgebildet sein.

Die Fangeinrichtung 16 ist in deren Längserstreckung quer zur Transportrichtung T des Werkstücks 11 bzw. quer zu einer Bearbeitungsrichtung des Bearbeitungswerkzeugs 13 angeordnet. Das Werkstück 11 wird in der Transportrichtung T relativ zur Fangeinrichtung 16 bewegt. Während der Transportbewegung des Werkstücks 11 steht die Fangeinrichtung 16 mit einem Außenumfang zumindest teilweise in Kontakt mit dem Werkstück 11, sodass keine Lücke zwischen der Fangeinrichtung 16 und dem Werkstück 11 gebildet ist. Zum Abfangen der Späne ist der Außenumfang der Fangeinrichtung 16 durch eine Vielzahl flexibler Fangelemente 21 gebildet, welche nachfolgend noch näher beschrieben werden.

Die Fangeinrichtung 16 ist um eine Drehachse 22 drehbar gelagert. Zum Abfangen der Späne führt die Fangeinrichtung 16 eine Rotationsbewegung R um die Drehachse 22 aus. Die Rotationsbewegung R der Fangeinrichtung 16 kann passiv durch den Kontakt zum sich bewegenden Werkstück 11 angetrieben sein oder auch aktiv durch einen nachfolgend näher beschriebenen Antrieb. Die Rotationsbewegung R kann im Uhrzeigersinn oder entgegen dem Uhrzeigersinn vorgesehen sein. Alternativ oder zusätzlich kann die Fangeinrichtung 16 einen Rotationskörper (nicht dargestellt), beispielsweise eine gummierte Laufrolle, aufweisen, wodurch eine verbesserte Bewegungsübertragung zwischen dem sich bewegenden Werkstück 11 und der Fangeinrichtung 16 gefördert werden kann.

Die Spanabführeinrichtung 17 ist trichterartig ausgebildet und weist zum Zuführen der Späne einen dem Werkstück 11 zugeordneten Öffnungsbereich 23 sowie einen Auslass 24, durch welchen die Späne abgeführt werden, auf. Der Begriff "trichterartig" bezieht ich im vorliegenden Fall auf eine Struktur mit einem sich verjüngenden oder erweiternden Querschnitt. Die Fangeinrichtung 16 ist zumindest teilweise innerhalb der trichterartigen Spanabführeinrichtung 17 angeordnet. Die Fangeinrichtung 16 steht mit einem Teilumfangsbereich gegenüber einem dem Werkstück 11 zugeordneten Randabschnitt 26 des Öffnungsbereichs 23 der Spanabführeinrichtung 17 hervor. Auf diese Weise kann die Fangeinrichtung 16 während der Transportbewegung des Werkstücks 11 in Kontakt zu dem Werkstück 11 gebracht werden. Die Spanabführeinrichtung 17 kann als eine Absaugeinrichtung ausgebildet sein.

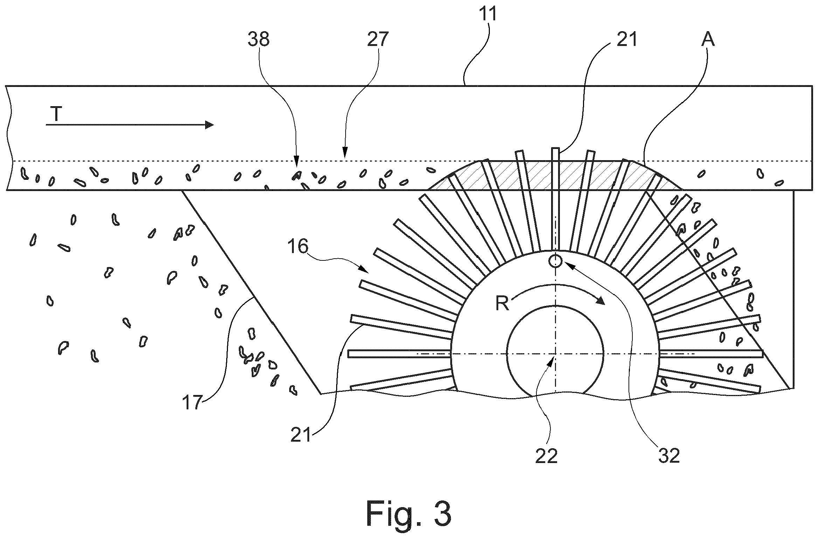

Figur 2 zeigt eine Seitenansicht der Abführvorrichtung 10 sowie ein Bearbeitungswerkzeug 13 der schematisch angedeuteten Werkzeugmaschine 12. Bei dem Bearbeitungswerkzeug 13 handelt es sich um ein exemplarisch dargestelltes Säge- oder Fräswerkzeug, das eine Werkstückkontur 27, beispielhaft durch eine Nut dargestellt, in das Werkstück 11 einbringt. Wie in Figur 2 dargestellt erfolgt der Bearbeitungsvorgang im Gleichlaufverfahren, bei welchem die Transportrichtung T des Werkstücks 11 und die Drehrichtung D des Bearbeitungswerkzeugs 13 im Arbeitsbereich 28 gleichgerichtet sind. Ein durch den spannehmenden Arbeitsvorgang ausgebildeter Spanstrahl 38 (in Fig. 3 verdeutlicht) ist dadurch in Richtung der Fangeinrichtung 16 gerichtet.

Zum Abfangen der Späne ist ein Außenumfang der Fangeinrichtung 16 durch die Vielzahl einzelner Fangelemente 21 gebildet. Diese Fangelemente 21 sind insbesondere als flexible Borsten oder Lamellen ausgebildet, die vollumfänglich entlang der Längserstreckung der Fangeinrichtung 16 vorgesehen sind. Die Fangelemente 21 bestehen aus einem oberflächenschonenden und an die Werkstückkontur 27 anpassbaren Material. Die Fangelemente 21 können aus einem Kunststoffmaterial, gummiartigen Material oder aus Naturfasern ausgebildet sein. Die Flexibilität der Fangelemente 21 ist in der Weise vorgesehen, dass die Späne abgefangen werden und die Oberfläche des Werkstücks 11 durch den Kontakt mit den Fangelementen 21 nicht beschädigt wird.

Alternativ zu den borstenartigen oder lamellenförmigen Fangelementen 21 kann die Fangeinrichtung 16 auch nur ein Fangelement 21 aufweisen, welches als ein flexibler Formkörper ausgebildet ist. Durch den flexiblen Formkörper kann der Außenumfang der Fangeinrichtung 16 ausgebildet sein. Der flexible Formkörper kann beispielsweise ein Schaumkörper, ein Filterelement oder ähnliches sein. Der Formkörper kann eine poröse Struktur aufweisen, in welcher die abgefangenen Späne aufgenommen werden können. Die Fangeinrichtung 16 kann einen Grundkörper 25 bzw. einen Achskörper aufweisen, an welchen die Fangelemente 21 oder das Fangelement 21 vorgesehen sind.

Während dem Abfangen der Späne steht die Fangeinrichtung 16 in Kontakt zu dem Werkstück 11. Dabei ist die Fangeinrichtung 16 in der Weise mit einem Teilumfang in Kontakt zu dem Werkstück 11 gebracht, dass die Fangelemente 21 in die durch das Bearbeitungswerkzeug 13 gebildete Werkstückkontur 27 eingreifen. Hierauf wird bezüglich Figur 3 noch näher eingegangen.

Der Fangeinrichtung 16 ist die Reinigungseinrichtung 18 in Form eines Abstreifers 29 zugeordnet. Der Abstreifer 29 erstreckt sich entlang einer Längserstreckung der Fangeinrichtung 16 und greift mechanisch in die Fangelemente 21 ein oder an die Fangelemente 21 an. Durch das mechanische Eingreifen oder Angreifen werden die Späne von den Fangelementen 21 entfernt. Dies erfolgt ähnlich eines Kammes.

Die Abführvorrichtung 10 weist zudem eine Druckluftquelle 31 auf. Die Druckluftquelle 31 kann die Fangeinrichtung 16 mit einem Druckluftstrom anströmen. Auf diese Weise können die abgefangenen und aufgenommenen Späne von den Fangelementen 21 entfernt werden. Durch eine tangentiale Anströmung der Fangeinrichtung 16 mit der Druckluft kann zudem die Rotationsbewegung R angetrieben werden. Die Druckluftquelle 31 kann mit einem Druckluftkanal 32 innerhalb der Fangeinrichtung 16 verbunden sein. Dieser Druckluftkanal 32 erstreckt sich innerhalb der Fangeinrichtung 16, insbesondere innerhalb des Grundkörpers 25, entlang einer Längserstreckung und weist mehrere Austrittsöffnungen auf, durch die ein radialer Austritt der Druckluft vorgesehen ist. Die Austrittsöffnungen des Grundkörpers können beispielsweise im Wesentlichen parallel orientiert sein. Ferner kann eine Orientierung der Austrittsöffnungen einstellbar sein.

Auf diese Weise kann die Druckluft die Fangeinrichtung 16 von innen nach außen radial durchströmen, um die abgefangenen und aufgenommenen Späne von den Fangelementen 21 zu entfernen. Durch eine entsprechende Strömungsführung der radial austretenden Druckluft kann zudem ein Antrieb der Rotationsbewegung R der Fangeinrichtung 16 ausgebildet sein. Die Druckluftquelle 31 kann ergänzend oder auch alternativ zu dem Abstreifer 29 vorgesehen sein.

Alternativ oder ergänzend zu der Druckluftquelle 31 wird die Rotationsbewegung R der Fangeinrichtung 16 durch eine Antriebseinrichtung 33 angetrieben. Die Antriebseinrichtung 33 kann beispielsweise als ein Elektromotor ausgebildet sein.

Die Fangeinrichtung 16 ist durch eine Stelleinrichtung 34 zwischen einer in Figur 2 dargestellten Gebrauchsposition 36 und einer Nichtgebrauchsposition überführbar. In der Gebrauchsposition 36 steht die Fangeinrichtung 16 in Kontakt mit dem Werkstück 11 und kann den erzeugten Spanstrahl 38 abfangen. Die Stelleinrichtung 34 ermöglicht insbesondere eine Stellbewegung in eine X-Richtung und/oder Y-Richtung. Auch eine Stellbewegung in eine Z-Richtung kann durch die Stelleinrichtung 34 vorgesehen sein. Die Stelleinrichtung 34 kann beispielsweise einen Pneumatikantrieb oder einen elektrischen Stellantrieb aufweisen. Die Stellbewegung kann beispielsweise diskret (d.h., in Stufen) ausführbar sein, sodass ausschließlich bestimmte Relativpositionen zwischen der Fangeinrichtung 16 und dem Werkstück 11 einnehmbar sind. Alternativ kann die Stellbewegung kontinuierlich (d.h., stufenlos) ausführbar sein, sodass im Wesentlichen eine beliebige Anzahl an Positionen einnehmbar sind.

Alternativ zu dem zuvor beschriebenen aktiven Antrieb der Rotationsbewegung R der Fangeinrichtung 16, kann die Rotationsbewegung R auch passiv durch den Kontakt zum Werkstück 11 angetrieben werden. Hierbei wird die Rotationsbewegung R der Fangeinrichtung 16 durch die Transportbewegung T des Werkstücks 11, d.h. durch den Werkstückvorschub, angetrieben.

In Figur 3 ist der durch den Bearbeitungsvorgang erzeugte Spanstrahl 38 sowie das Abfangen des Spanstrahls 38 durch die Fangeinrichtung 16 dargestellt. Aufgrund des spannehmenden Bearbeitungsvorgangs wird der Spanstrahl 38 in Richtung der Fangeinrichtung 16 erzeugt und die Späne werden entlang der durch das Bearbeitungswerkzeug 13 erzeugten Werkstückkontur 27 geschleudert. Ohne die Fangeinrichtung 16 würde der Spanstrahl 38 über die Werkstückkontur 27 austreten und in die Umgebung geschleudert werden. Darüber hinaus könnte ohne die Fangeinrichtung 16 auch eine Vielzahl an Spänen in der Werkstückkontur (z.B., in der Nut) verbleiben. Indem die Fangelemente 21 in diese Werkstückkontur 27 eingreifen, wird der Spanstrahl 38 jedoch durch die Fangelemente 21 abgefangen. Indem die Fangeinrichtung 16 mit einem Teilumfangsbereich in die Werkstückkontur 27 eingreift, ist innerhalb der Werkstückkontur 27 durch die Fangelemente 21 ein relativ großer Abfangbereich A (schraffiert dargestellt) zum Abfangen das Spanstrahls 38 gebildet. Gegenüber einer Flachbürste ermöglicht dies eine wesentlich höhere Spanabfangrate. Ferner kann eine erhöhte Standzeit der Bearbeitungsmaschine erzielt werden.

Es ist für den Fachmann ersichtlich, dass einzelne, jeweils in verschiedenen Ausführungsformen beschriebene Merkmale auch in einer einzigen Ausführungsform umgesetzt werden können, sofern sie nicht strukturell inkompatibel sind. Gleichermaßen können verschiedene Merkmale, die im Rahmen einer einzelnen Ausführungsform beschrieben sind, auch in mehreren Ausführungsformen einzeln oder in jeder geeigneten Unterkombination vorgesehen sein.

## Patentansprüche

1. Abführvorrichtung (10) zum Abführen von Spänen, die durch einen spannehmenden Bearbeitungsvorgang an einem Werkstück (11) entstehen, insbesondere für eine Werkzeugmaschine (12), mit einer Fangeinrichtung (16), die zum Abfangen der Späne zumindest teilweise in einem durch den spannehmenden Bearbeitungsvorgang erzeugten Spanstrahl (38) anordenbar ist,
**dadurch gekennzeichnet, dass**
die Fangeinrichtung (16) um eine Drehachse (22) drehbar gelagert ist und zum Abfangen der Späne eine Rotationsbewegung (R) ausführbar ist.

2. Abführvorrichtung nach Anspruch 1, bei der ferner die Fangeinrichtung (16) einen Rotationskörper aufweist, dessen Außenumfang zumindest bereichsweise durch wenigstens ein Fangelement (28) zum Abfangen der Späne ausgebildet ist.

3. Abführvorrichtung nach Anspruch 2, bei der ferner das wenigstens eine Fangelement (28) als ein flexibler Formkörper ausgebildet ist, der an eine Werkstückkontur (27) des zu bearbeitenden Werkstücks (11) anpassbar ist, oder eine Vielzahl Fangelemente (28) vorgesehen sind, die als flexible Borsten und/oder Lamellen ausgebildet ist.

4. Abführvorrichtung nach einem der vorhergehenden Ansprüche, bei der ferner der Fangeinrichtung (16) eine Reinigungseinrichtung (18) zum Entfernen der abgefangenen Späne zugeordnet ist.

5. Abführvorrichtung nach Anspruch 4, bei der ferner die Reinigungseinrichtung (18) einen sich entlang einer Längserstreckung der Fangeinrichtung (16) erstreckenden Abstreifer (29) aufweist und das Entfernen der Späne durch ein Angreifen des Abstreifers (29) an der Fangeinrichtung (16) oder ein Eingreifen des Abstreifers (29) in die Fangeinrichtung (16) vorgesehen ist.

6. Abführvorrichtung nach einem der vorhergehenden Ansprüche, bei der ferner eine Druckluftquelle (31) vorgesehen ist und die Fangeinrichtung (16) zum Entfernen der Späne und/oder zum Antreiben der Rotationsbewegung (R) durch einen Druckluftstrom anströmbar und/oder durchströmbar ist.

7. Abführvorrichtung nach Anspruch 6, bei der ferner innerhalb der Fangeinrichtung (16) wenigstens ein Druckluftkanal (32) ausgebildet ist und die Fangeinrichtung (16) zum Entfernen der Späne und/oder zum Antreiben der Rotationsbewegung (R) von dem Druckluftstrom radial durchströmbar ist.

8. Abführvorrichtung nach einem der vorhergehenden Ansprüche, bei der ferner eine Antriebseinrichtung (33) vorgesehen ist, durch welche die Rotationsbewegung (R) der Fangeinrichtung (16) antreibbar ist, wobei eine Drehrichtung der Fangeinrichtung bevorzugt einstellbar ist, und/oder wobei eine Drehzahl der Fangeinrichtung bevorzugt steuerbar und/oder regelbar ist.

9. Abführvorrichtung nach einem der vorhergehenden Ansprüche, bei der ferner eine Stelleinrichtung (34) vorgesehen ist, durch welche eine Stellbewegung zumindest der Fangeinrichtung (16) zwischen einer Nichtgebrauchsposition und einer Gebrauchsposition (36) ansteuerbar ist.

10. Abführvorrichtung nach einem der vorhergehenden Ansprüche, bei der ferner eine Spanabführeinrichtung (17) vorgesehen ist, wobei die Fangeinrichtung (16) zumindest teilweise in der Spanabführeinrichtung (17) angeordnet ist und das wenigstens eine Fangelement (21) zum Abfangen der Späne zumindest bereichsweise gegenüber einem Randabschnitt (26) der Spanabführeinrichtung (17) hervorsteht.

11. Werkzeugmaschine (12) zum Bearbeiten eines Werkstücks (11), insbesondere Werkstück (11), das zumindest teilweise aus Holz, einem Holzwerkstoff, Kunststoff, Verbundwerkstoff oder dergleichen ausgebildet ist, mit einer Werkstückauflage zum Aufnehmen des Werkstücks (11), mit zumindest einem Bearbeitungswerkzeug (13) zum Ausführen eines spannehmenden Bearbeitungsvorgangs, wobei das Bearbeitungswerkzeug (13) und/oder das Werkstück (11) zum Ausführen des Bearbeitungsvorgangs relativ zueinander bewegbar vorgesehen sind, sowie mit einer Abführvorrichtung (10) zum Abführen von Spänen, die durch den spannehmenden Bearbeitungsvorgang am Werkstück (11) entstehen, **dadurch gekennzeichnet, dass** die Abführvorrichtung (10) nach einem der Ansprüche 1 bis 10 ausgebildet ist.

12. Werkzeugmaschine nach Anspruch 11, bei der ferner die Werkzeugmaschine (12) als Durchlaufmaschine ausgebildet ist und die Fangeinrichtung (16) der Abführvorrichtung (10) zum Abfangen der Späne in Richtung eines durch den spannehmenden Bearbeitungsvorgang erzeugten Spanstrahls (38) angeordnet ist.

13. Werkzeugmaschine nach Anspruch 11 oder 12, bei der ferner das wenigstens eine Fangelement (21) der Fangeinrichtung (16) in Kontakt zu dem zu bearbeitenden Werkstück (11) bringbar sein, um den Spanstrahl (38) abzufangen.

14. Verfahren zum Abführen von Spänen, die durch einen spannehmenden Bearbeitungsvorgang an einem Werkstück (11) entstehen, insbesondere für eine Werkzeugmaschine (12), aufweisend die Schritte, dass eine Fangeinrichtung (16) zumindest teilweise in einem durch den spannehmenden Bearbeitungsvorgang erzeugten Spanstrahl (38) angeordnet wird und die Fangeinrichtung (16) während dem Abfangen der Späne eine Rotationsbewegung (R) um eine Drehachse (22) ausführt.

15. Verfahren nach Anspruch 14, bei dem ferner wenigstens ein Fangelement (21) der Fangeinrichtung (16) durch die Rotationsbewegung (R) in eine durch den spannehmenden Bearbeitungsvorgang gebildete Werkstückkontur (27) eingreift und der in der Werkstückkontur (27) gebildete Spanstrahl (38) abgefangen und/oder abtransportiert wird.
